Europäisches Patentamt

European Patent Office

Office européen des brevets

(11) Publication number: **0 295 588 B1**

## EUROPEAN PATENT SPECIFICATION

(45) Date of publication of patent specification: **28.04.93**  (51) Int. Cl.⁵: **H04N 1/024**, H04N 1/387

(21) Application number: **88109315.7**

(22) Date of filing: **10.06.88**

(54) **Image reading apparatus and binary conversion process therefor.**

(30) Priority: **17.06.87 JP 151629/87**

(43) Date of publication of application:
**21.12.88 Bulletin 88/51**

(45) Publication of the grant of the patent:
**28.04.93 Bulletin 93/17**

(84) Designated Contracting States:
**DE FR GB**

(56) References cited:
**GB-A- 2 140 649**
**US-A- 4 419 696**
**US-A- 4 591 727**
**US-A- 4 660 095**
**US-A- 4 687 944**

(73) Proprietor: **Dainippon Screen Mfg. Co., Ltd.**
**1-1, Tenjinkitamachi Teranouchi-Agaru**
**4-chome Horikawa-Dori**
**Kamikyo-ku Kyoto 602(JP)**

(72) Inventor: **Hoki, Tetsuo c/o Dainippon Screen**
**Mfg. Co., Ltd.**
**1-1 Tenjinkitamachi Teranouchi-agaru**
**4-chome**
**Horikawa-dori Kamikyo-ku Kyoto 602(JP)**
Inventor: **Sezaki, Yoshinori Dainippon Screen**
**Mfg. Co., Ltd.**
**1-1 Tenjinkitamachi Teranouchi-agaru**
**4-chome**
**Horikawa-dori Kamikyo-ku Kyoto 602(JP)**

(74) Representative: **Goddar, Heinz J., Dr. et al**
**FORRESTER & BOEHMERT Franz-**
**Joseph-Strasse 38**
**W-8000 München 40 (DE)**

Rank Xerox (UK) Business Services
(3.10/3.5x/3.0.1)

## Description

The present invention relates generally to an image reading apparatus with the features of the first part of claim 1 and the binary conversion process therefore with the features of the first part of claims.

EP-A-0173099 and US-A-4419696 disclose an image reading apparatus for scanning an object with a photoelectric image sensor. These documents show how to adjust photoelectric elements under the condition that the black region of the original is clearly distinguishable from the white region.

It is the object of the invention to determine the threshold value if the difference in density between the background (non-image portion) and the image portion of the original is small.

According to the invention this object is solved by the features of the second part of claim 1 and claim 7, resp.

Subjects of the sub claims are prefered embodiments of the apparatus and the method of invention, resp.

The invention will become more apparent from the following detailed description of the present invention when taken in conjunction with the accompanying drawings.

Fig. 1 is a graph showing the diversification of the sensitivity of respective photocells constituting an image sensor;

Fig. 2 is a graph showing the distribution of light amount projected on each photocell in reading images;

Fig. 3 is a flow chart showing the steps of binary conversion process in accordance with the present invention;

Figs. 4A to 4E shows, in the stepwise manner, the processing of data detected by a linear image sensor;

Fig. 5 is a block diagram showing a main portion of an apparatus for checking appearance of a printed board to which the present invention is applied;

Fig. 6 is a flow chart corresponding to the step A of Fig. 3;

Fig. 7 is a flow chart corresponding to the steps B to E of Fig. 3;

Fig. 8 is a flow chart corresponding to the step F of Fig. 3;

Fig. 9 is a flow chart corresponding to the step G of Fig. 3;

Fig.10 is a flow chart corresponding to the steps J and K of Fig. 3;

Fig. 11 is a block diagram showing definite components of the apparatus for checking the appearance of a printed board; and

Figs. 12 and 13 are block diagrams showing details of data normalizer.

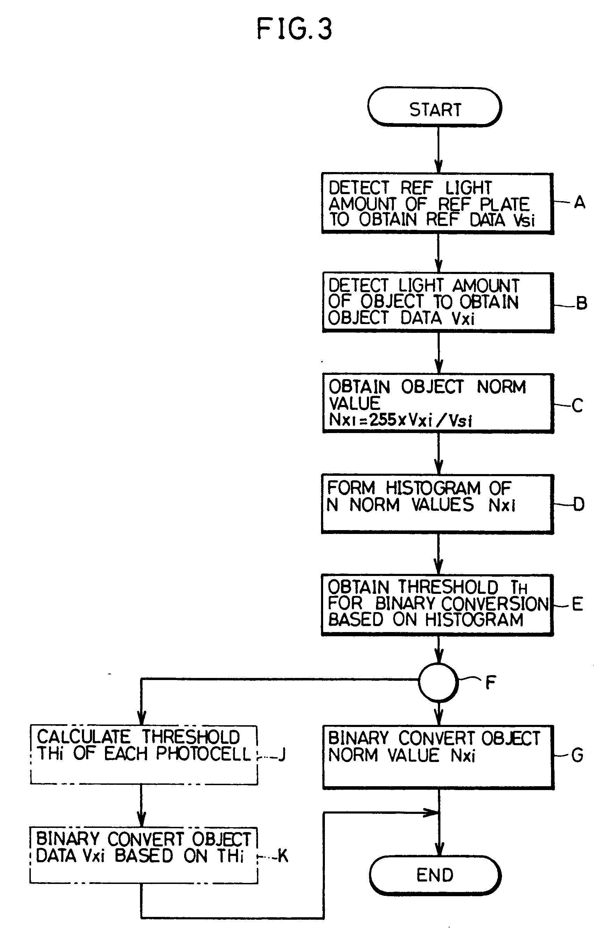

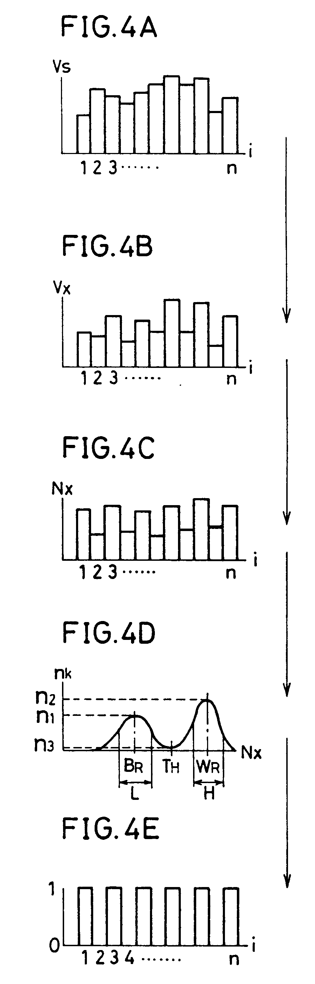

In the following, embodiments of the present invention will be described with reference to Fig. 3 and Figs. 4A to 4E. Fig. 3 is a flow chart showing the steps of binary conversion process in accordance with the present invention. Figs. 4A to 4E show the states of processing of the data detected by a linear image sensor. The data processing corresponding to the flow chart of Fig. 3 is schematically shown.

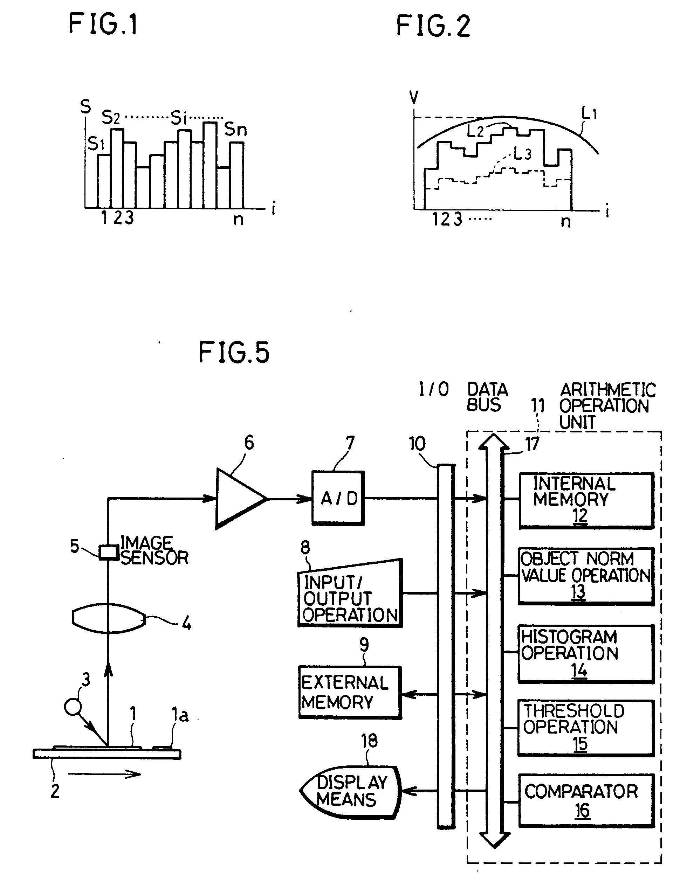

In the step A, the reference light amount of the reference plate is detected by photoelectric converting means. A number of (n) reference data $V_{si}$ - ($i = 1...n$) corresponding to each of the photocells constituting the liner image sensor are detected. The reference data $V_{si}$ are shown in Fig. 4A. The output levels of the reference data $V_{si}$ include the unevenness of light amount in the illuminating system and in the focusing optical system and the diversification of sensitivity of the photocells, as did the data $L_2$ of the light amount shown in Fig. 1.

In the step B, the light amount of the object is detected by the said liner image sensor and n object data $V_{xi}$ ($i = 1...n$) are obtained. The signal levels of the object data $V_{xi}$ is in proportion to the reference data $V_{si}$ corresponding to the density of the image portion and the density of the non-image portion of the object, as shown in Fig. 4B.

In the step C, each of the object data $V_{xi}$ is divided by the corresponding reference data $V_{si}$. The result of the operation is defined as an object normalized value $N_{xi}$ ($i = 1...n$). The object normalized value $N_{xi}$ is shown in Fig. 4C. The object normalized value represents the proportion of a signal level corresponding to the image portion or the non-image portion of the original to the reference level $V_{si}$ of each photocell. Therefore, the object normalized value denotes the output level which is shading corrected.

In the step D, the frequency of appearance $n_K$ of the object normalized values $N_{xi}$ ($i = 1...n$) corresponding to each of the photocells is evaluated. Consequently, a histogram such as shown in Fig. 4D is obtained. In this histogram, there is a peak of frequency of appearance in the range corresponding to the non-image portion of the object (hereinafter referred to as non-image normalized value range L) and there is a peak of frequency of appearance in the range corresponding to the image portion (hereinafter referred to as image normalized value range H).

In the step E, the threshold value $T_H$ for binary conversion is evaluated based on the said histogram. The threshold value $T_H$ is an intermediate value between the value $B_R$ corresponding to the non-image portion in the non-image normalized value range L and the value $W_R$ corresponding to the image portion in the image normalized value range H, with the threshold value corresponding to the concave portion of the frequency of appearance.

In the step G, the above-mentioned shading corrected object normalized value $N_{xi}$ is binary converted based on the said threshold value $T_H$. Consequently, binary signals such as shown in Fig. 4E are obtained.

Instead of the step G, the present invention may comprise the steps J and K.

In the step J, the said threshold value $T_H$ is multiplied by the reference data $V_{si}$ to obtain $T_{Hi}$. Thus, the threshold level $T_{Hi}$ of each photocell is evaluated.

In the step K, the said object data $V_{xi}$ is directly binary converted based on the threshold level $T_{Hi}$. Consequently, binary signals such as shown in Fig. 4E are obtained.

A histogram is formed to obtain the threshold value $T_H$ in the steps D and E so that the method of deciding $T_H$ can be understood easily. The formation of histogram is not necessarily required so long as the threshold value can be obtained.

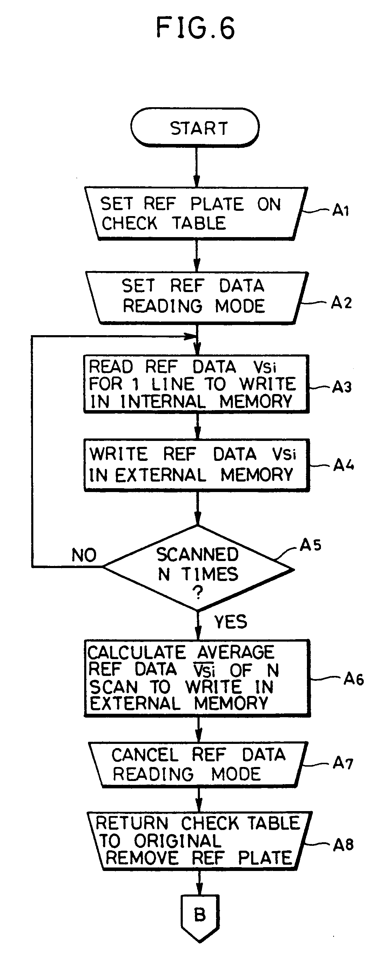

Fig. 5 is a block diagram showing a main portion of an apparatus for checking appearance of a printed board to which the binary conversion process of the present invention is applied.

The apparatus comprises checking table 2 provided relatively movable in the direction of the arrow for placing a printed board 1, an illuminating lamp 3 provided above the checking table 2, a focusing lens 4, photoelectric converting means 5, an amplifier 6 for amplifying signals detected by the photoelectric converting means 5, an A/D converter 7 and an arithmetic operating unit 11.

The photoelectric converting means 5 comprises a linear image sensor in which photocells such as CCD, photodiode and the like are arranged in a line in the direction perpendicular to the surface of the sheet of Fig. 5. The linear image sensor 5 comprises eight image sensor blocks and each block of the image sensor comprises one-dimensional arrangement of about 2000 CCD elements. Each block comprises an illuminating lump 3, a focusing lens 4, an amplifier 6, and an A/D convertor 7.

The A/D converter 7, an input/output operating portion 8, an external memory 9 and display means 18 for displaying output are connected to the arithmetic operating unit 11 through an input/output interface 10.

The arithmetic operating unit 11 is constituted by a microcomputer, which is illustrated by a schematic block diagram in Fig. 5. The arithmetic operating unit 11 comprises an internal memory 12 for temporarily storing detected signals for one scanning (one scanning line) by the linear image sensor 5, the object normalized value operating means 13, histogram forming means 14 for forming a histogram by counting the frequency of appearance of the object normalized value $N_{xi}$ for one scanning of the image sensor 5, threshold value operating means 15 for obtaining the threshold value $T_H$ for the binary conversion based on the histogram, and a comparator 16 for binary converting the object normalized value $N_{xi}$ based on the threshold value $T_H$, with these components connected to each other through a data bus 17.

Although each of the arithmetic means and comparator 13 to 16 is illustrated as an independent functional block for convenience, the function of each means can be provided by one CPU in accordance with respective programs in a microcomputer.

The function of an apparatus for checking the appearance of a printed board to which the present invention is applied will be described in the following with reference to the flow charts of Figs. 6 to 9.

Fig. 6 is a flow chart corresponding to the step A of Fig. 3, which is the step of obtaining a reference data $V_{si}$ by detecting the reference light amount of the reference plate 1a.

In the step A1, a white reference plate 1a is set on a checking table 2. In the step A2, the operation mode of the input/output operating portion 8 is set at the reference data reading mode.

In the step A3, the reference light amount of the white reference plate 1a is detected, reference data $V_{si}(i...n)$ for every cell in one line are read and written in the internal memory 12. In this apparatus, all image sensors 5 of 8 blocks read the reference data for every cell. In the step A4, the reference data $V_{si}$ are successively written in the external memory 9.

In the step A5, it is determined whether the reference data $V_{si}$ for the prescribed N times of scanning have been finished or not. In the step A6, the average reference data of N times of scanning $\overline{V_{si}}$ $(i = 1...n)$ for every cell is evaluated and stored in the external memory 9. The reason for evaluating the average of N times of scanning is that an error may occur when fine dusts and the like are deposited on the white reference plate, if the reference data is to be determined by one measurement. In this embodiment, the checking table 2 is moved slightly for each scanning, whereby the average value of 50 times of scanning can be obtained. The number of scanning may be appropriately selected to obtain the required stable value. The reference value may not necessary be the average value provided that a relatively stable reference data is obtained

The reference data will be simply denoted by $V_{si}$ in the following.

In the step A7, the reference data reading mode is cancelled. In the step A8, the checking table 2 is returned to the start (origin) position and the reference plate 1a is removed from the checking table 2.

The step A for reading the reference data $V_{si}$ is thus completed. The reference data $V_{si}$ which is obtained at first is used in the following operations except such occasions as the exchange of the illuminating lamp.

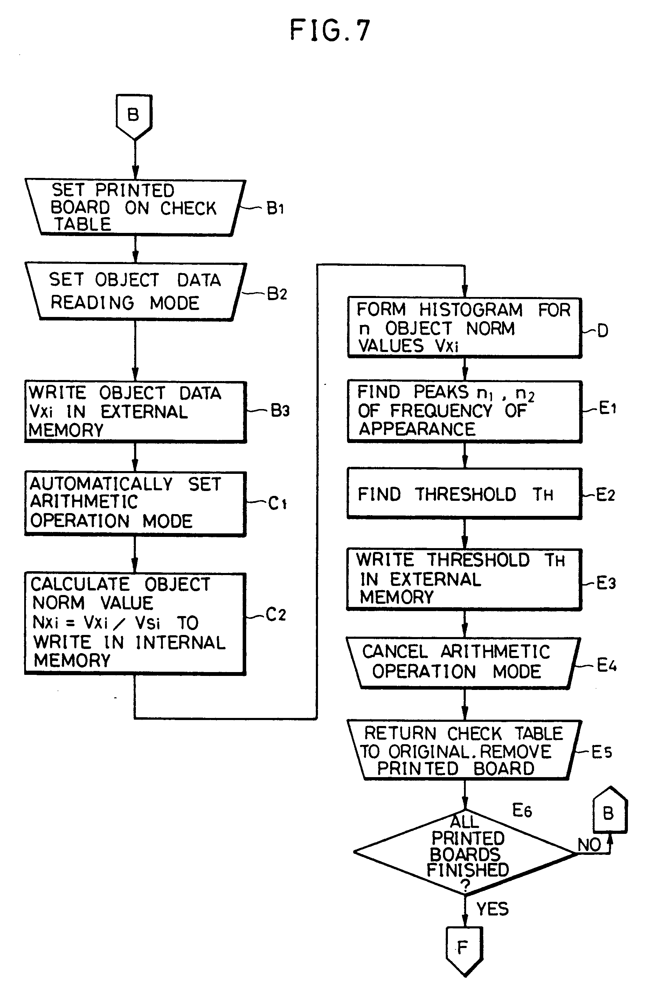

Fig. 7 is a flow chart corresponding to the steps B to E of Fig. 3, wherein the object data $V_{xi}$ of the printed board 1 is obtained and the threshold value $T_H$ for the binary conversion is obtained.

In the step B1, a printed board 1 is placed on the checking table 2 and, in the step B2, the object data reading mode is set.

In the step B3, the whole or a portion of the object is scanned and the object data $V_{xi}$ (i = 1...n) is written in the external memory 9. The number of data which should be obtained in this step is the number enough to provide the required threshold value $T_H$ in the following steps C1 to E2. Therefore the whole object need not be scanned and only one portion of the object may be scanned.

In the step C1, the arithmetic operation mode is automatically set for the following arithmetic operation.

In the step C2, the object normalized value $N_{xi}$ is evaluated based on the following equation using the above described reference data $V_{si}$ (i = 1...n) and the object data $V_{xi}$ (i = 1...n), to be written in the internal memory 12.

In this embodiment, the maximum value of the object normalized value $N_{xi}$ is defined as 255.

$$N_{xi} = 255 \times V_{xi}/V_{si} \qquad (i = 1...n)$$

In the step D, the frequency of appearance N of each of the said normalized values $N_{xi}$ 0 to 255 is counted by the histogram forming means 14, and the frequency of appearance $n_K$ (K = 1...255) is successively stored in the internal memory 12. The data corresponds to the histogram shown in Fig. 4D.

In the step E1, the frequency of appearance $n_K$ is compared by the threshold value operating means 15 based on the said frequency appearance $n_K$, and two peaks $n_1$ and $n_2$ of the frequency of appearance are detected. In the object normalized values corresponding to the peaks of the frequency of appearance, the relatively small value corresponds to the value $B_R$ which corresponds to the non-image portion, and the relatively large value corresponds to the value $W_R$ which corresponds to the image portion of Fig. 4D.

Sometimes the normalized value of the non-image portion is larger than that of the image portion, for example in an object of positive image. This invention can be applied in any case where the values $B_R$ and $W_R$ respectively corresponding to the non-image portion and the image portion can be obtained.

In the step E2, a concave portion $n_3$ between the said two peaks $n_1$ and $n_2$ of the frequency of appearance is detected in the similar manner. The object normalized value corresponding to the concave portion $n_3$ corresponds to the threshold value $T_H$ of Fig. 4D. The threshold value $T_H$ is stored in the external memory 9 in the step E3. The threshold value $T_H$ is used in either of the two methods which will be described in the steps G and J, respectively.

In the step E4, the arithmetic operating mode is canceled. In the step E5, the checking table 2 is returned to the start and the printed board is removed.

If various printed boards should be checked, the above described steps B (B1 to E5) are effected on all the printed boards and the threshold value for each of the printed boards is detected beforehand. In the step E6, whether the step B have been effected or not for all printed boards is determined. Thereafter, the flow proceeds to the step F.

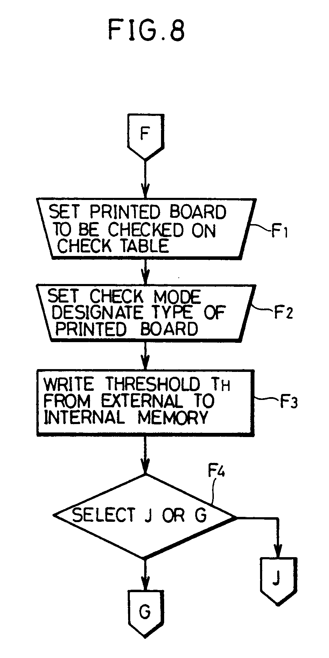

Fig. 8 is a flow chart corresponding to the step F of Fig. 3, for the preparation of binary conversion process.

In the step F1, the board 1 to be checked is set on the checking table 2. In the step F2, the apparatus is set at the checking mode by an operation key of the input apparatus 8 and the type of the said board 1 is inputted. In the step F3, the threshold value $T_H$ corresponding to the board type is written in the internal memory 12 from the external memory 9.

In the step F4, the following step G or J is appropriately selected. A proper binary conversion processing signal can be obtained by either of the steps G and J.

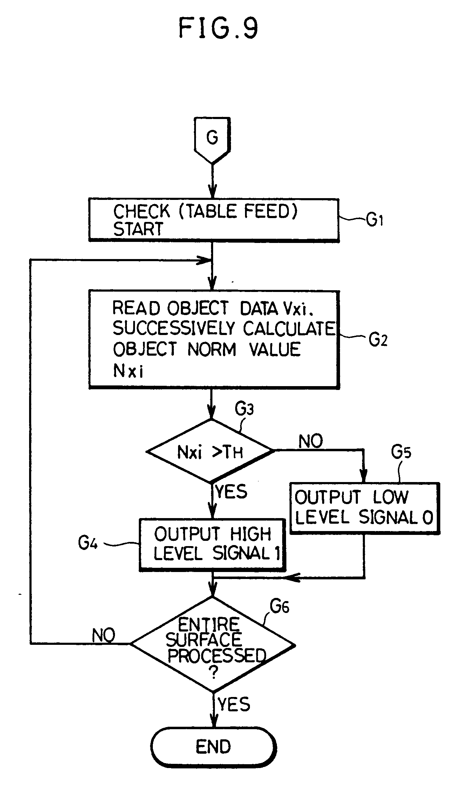

Fig. 9 is a flow chart corresponding to the step G of Fig. 3. In the step G1, the checking table 2 start to move by the operation of the check start key. In the step G2, the object data $V_{xi}$ are read and the object normalized value $N_{xi}$ are obtained successively based on the following equation.

$$N_{xi} = 255 \times V_{xi}/V_{si} \qquad (i = 1...n)$$

The object normalized value data $N_{xi}$ is the value obtained by dividing the object data $V_{xi}$ read by ith photocell by the maximum sensitivity $V_{si}$ including shading of the said photocell. In the present embodiment, the object normalized value data $N_{xi}$ corresponds to the reflectance

In the step G3, the normalized value $N_{xi}$ is compared with the threshold value $T_H$ by the comparator 16. If the normalized value $N_{xi}$ is larger than

the threshold value $T_H$, a high level signal 1 is outputted in the step G4. If it is smaller than the threshold value $T_H$, a low level signal 0 is outputted in the step G5. In the step G6, whether the binary conversion process for all scanning is completed or not is determined, thereby finishing the process of binary conversion.

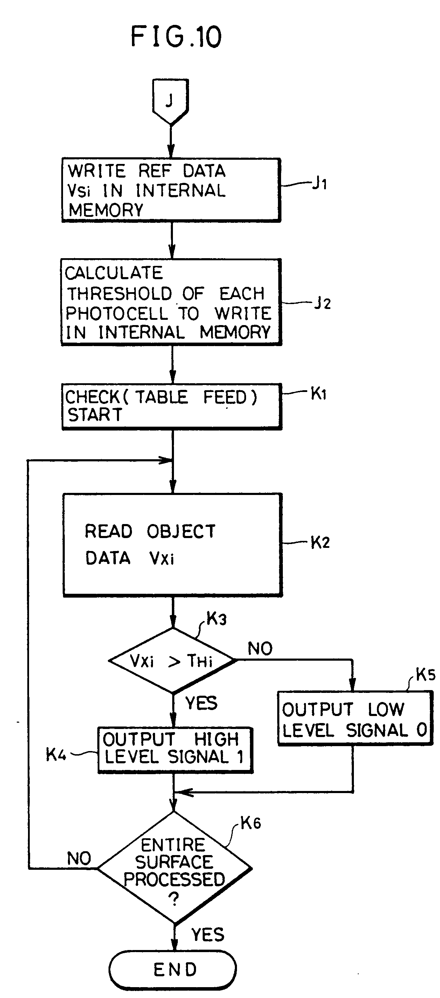

Fig. 10 is a flow chart corresponding to the binary processing method comprising the steps J to K, which may be selected in stead of the step G of Fig. 3.

In the step J1, the said reference data $V_{si}$ is written in the internal memory 12. In the step J2, the threshold value $T_{H1}$ of each photocell is evaluated based on the following equation to be written in the internal memory 12.

$$T_{Hi} = (T_H \times V_{si})/255 \qquad (i = 1...n)$$

In the following steps K1 to K6, the binary processing for all the object data $V_{xi}$ is carried out through the similar steps as the above described binary conversion process (G1 to G6).

In the above embodiment, the present invention is applied to an apparatus for checking printed boards. However, the present invention is not limited to this embodiment and it may be widely applied to the image reading apparatuses. The present invention may be applied to a transmitting film negative. In that case, the reference data is obtained by employing a transparent reference plate. Therefore, the reference plate is not limited to the white one and the present invention may be applied if the plate has a uniform reflection density or transmittance density.

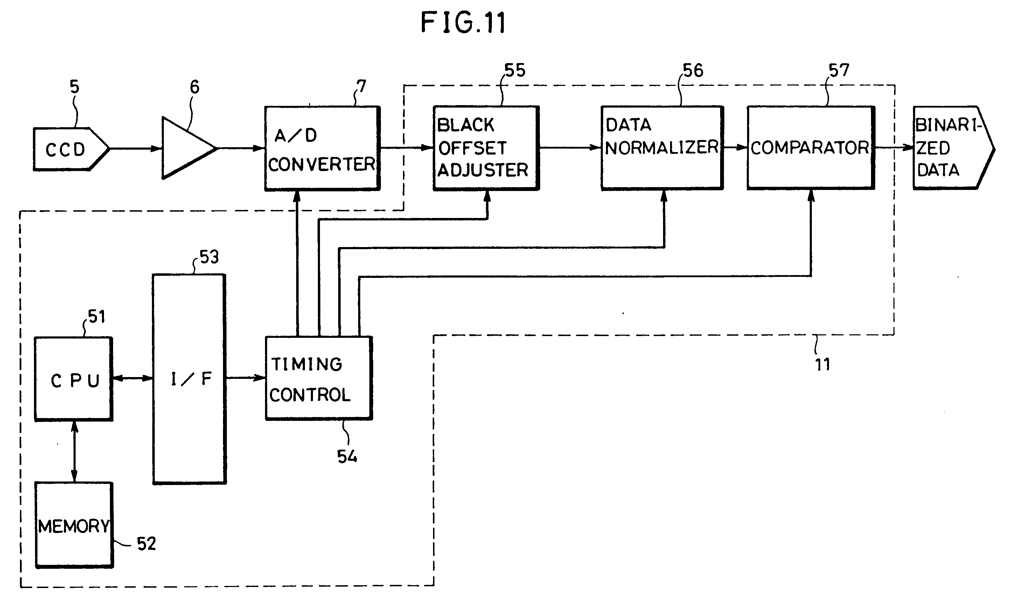

A preferred structure of the actual application of the present invention will be described in the following. Fig. 11 shows definite components of the apparatus for checking the appearance of a printed board shown in Fig. 5.

Referring to Fig. 11, the apparatus for checking the appearance of a printed board comprises a CCD line sensor 5; an amplifier 6 for amplifying an analog signal from the line sensor; an A/D converter 7 for converting the analog signal to a digital signal; and an arithmetic operating unit 11 for processing the A/D converted digital signal. The arithmetic operating unit 11 comprises a CPU 51 for controlling the whole unit; a memory 52 appended to the CPU; an I/F for connecting the CPU to other components; a timing control 54 for processing signals between each of the components; a black offset adjuster 55 for comparing an electrical signal detected by the CCD with a prescribed reference signal; a data normalizer 56 for normalizing the electric signal detected by the CCD based on the black offset signal; and a comparator 57 for binary converting the normalized data by comparing the same with the prescribed threshold value level.

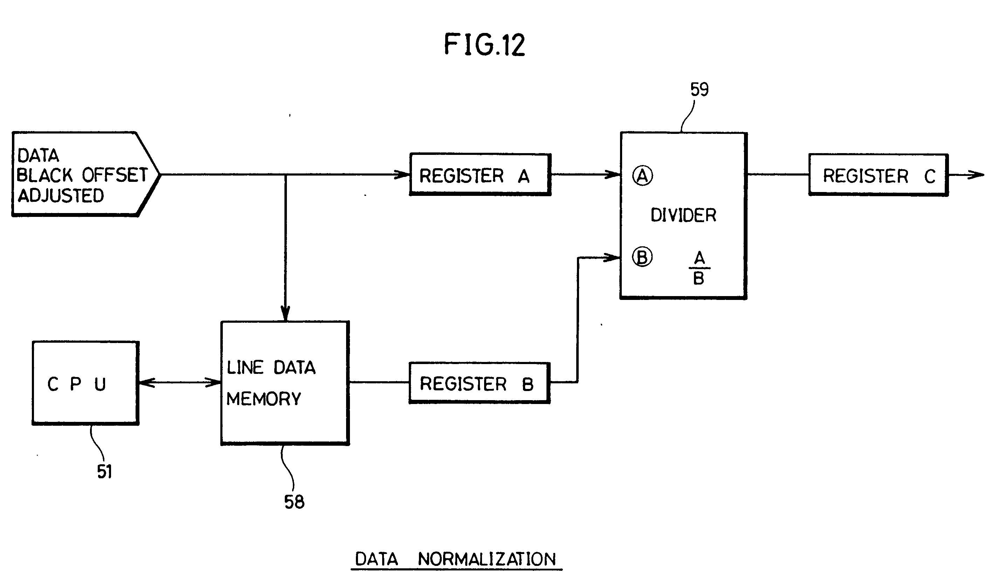

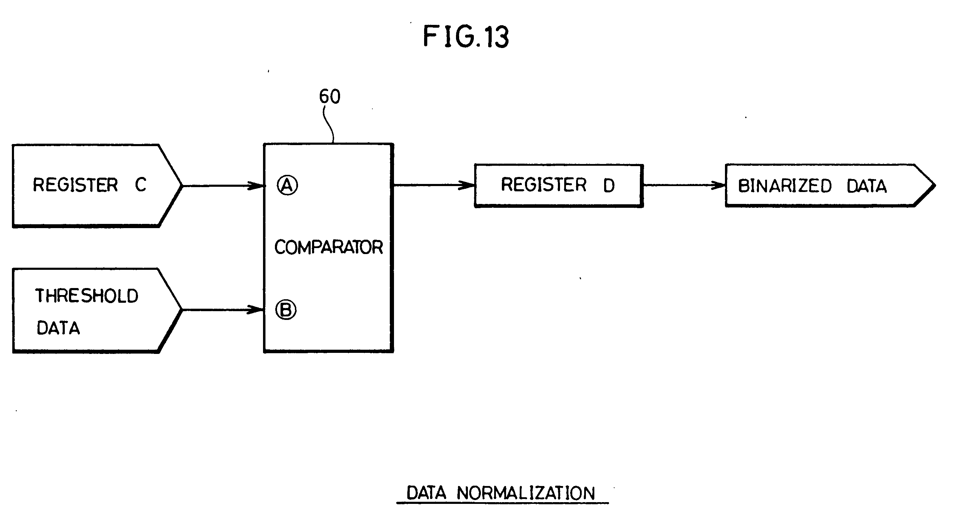

Figs. 12 and 13 illustrate details of data normalizer 56 and the comparator 60. Referring to Figs. 12 and 13, the data normalizer 56 comprises a line data memory 58 for storing one line of data detected by the line sensor 5 from the reference white plate; a register B for holding data in the line data memory 58; a register A for holding data detected from the sample; a divider 59 for calculating the value C = A/B from the data A held in the register A and from the data B held in the register B; a register C for holding the data A/B obtained by the divider 59; a comparator 60 for comparing the data C held in the register C and a previously obtained threshold value data D for outputting a binary converting data based on the result; and a register D for holding the binary converting data outputted from the comparator.

With reference to Figs. 11 to 13, the definite operation of the apparatus for checking the appearance of the printed board will be described. The reference white plate is scanned by a line sensor 5. The resulting data is transferred to the black offset adjuster 55 through the amplifier 6 and the A/D converter 17 line by line. The black offset adjuster 55 is provided to let the data obtained from the line sensor have an absolute value with a constant reference value. The specific operation is as follows. Generally, the line sensor detects a constant signal level even if the color of the object to be detected is black. In order to detect a signal level relative to the reference white plate, a constant reference level is required. Therefore, a signal level obtained from a reference black is subtracted from the signal level from each single detecting cell, whereby a signal having a constant level employing black as a reference can be obtained. For this purpose, the line sensor comprises a plurality of unit detecting elements, a unit detecting element existing at one and thereof detects a signal from the reference black. The data which has been subjected to the black offset adjustment is stored in the line data memory 58.

Thereafter, the whole printed board is prescanned by the line image sensor. Consequently, the reference threshold value is obtained. The process of obtaining the reference threshold value is the same as the flow shown in Figs. 6 and 7. The only difference is that the data is black offset.

Thereafter, the data from the printed board to be checked is binary converted. The printed board to be checked is scanned line by line. The obtained data is black offset adjusted and is held in the register A. The data of the printed board to be checked held in the register A is divided by the data obtained from the reference white plate held in the register B by means of the divider 59, with the result being held in the register C. The result of the operation corresponds to the object normalized value. The data held in the register C is compared with the threshold value obtained as described above in the comparator 60. The result is binary converted to be held in the register D and is outputted.

The operation is the same as the flow shown in Figs. 8 to 10.

As described above, according to the present invention, the image reading apparatus comprises a reference plate for obtaining a reference signal; a table for mounting an original having a portion of first density and a portion of a second density which is different from the first density; scanning means for scanning the object mounted on the table and the reference plate, comprising an illuminated apparatus for illuminating the object and the reference plate, photoelectric conversion means for detecting the light amount from the object and the reference plate to output an output signal corresponding to the light amount, and an optical system for projecting the light from the object and from the reference plate onto the photoelectric converting means; object normalized value operating means for operating an object normalized value which is represented by a proportion of a first output signal obtained from the reference plate to a second output signal obtained from the object; and binary conversion threshold value determining means for determining a binary conversion threshold value for binary converting the object normalized value based on the distribution of the object normalized values.

Therefore, the first output signal obtained from the reference plate and the second output signal obtained from the object can be provided by the same illuminating apparatus, the same photoelectric converting means and by the same optical system. Therefore, the object normalized value evaluated based on the two signals depends only on the density of the object, and is independent from the unevenness of the light amount in the focusing optical system and from the diversification of the cells in the photoelectric converting means. Accordingly, if the distribution of the object normalize value is obtained based on the value, two peaks of the object normalized values respectively corresponding to the image portion and the non-image portion can be obtained. Consequently, by employing the intermediate value between the two peak values as a binary conversion threshold value, an image processing apparatus and the binary conversion process thereof can be provided which is independent from the unevenness of the light amount in the focusing optical system and from the diversification of the photocells in the photoelectric converting means.

Even if the density of the image portion and of the non-image portion of the object is shifted to the lower density or to the higher density, or even if the difference between the densities is small, the threshold value can be correctly defined, whereby a proper binary conversion signal can be obtained, which enables reliable image reading.

Although the present invention has been described and illustrated in detail, it is clearly understood that the same is by way of illustration and example only and is not to be taken by way of limitation, the scope of the present invention being limited only by the terms of the appended claims.

The features disclosed in the foregoing description, in the claims and/or in the accompanying drawings may, both separately and in any combination thereof, be material for realising the invention in diverse forms thereof.

## Claims

1. An image reading apparatus comprising:
   - a reference plate (1a) for obtaining a reference signal,
   - a table (2) for placing an object (1), said object having an image represented by a portion of a first optical density and a portion of a second optical density which is different from the first optical density,
   - scanning means (2) for scanning the object placed on said table and said reference plate, having
   - an illuminating apparatus (3) for illumination said object and said reference plate,
   - photoelectric converting means (5) for detecting the amount of light from said object and from said reference plate to output an output signal corresponding to said amount of light, and
   - an optical system (4) for projecting light from said object and from said reference plate onto said photoelectric converting means (5),
   - object normalized value operating means (13) for evaluating an object normalized value which is represented by the ratio of a first output signal obtained from said reference signal to a second output signal obtained from said object,
   characterized in that
   - said photoelectric converting means include a plurality of photoelectric elements,
   - a said first output signal is obtained by scanning said reference plate and said second output signal is obtained by scanning said object for each said photoelectric element, and

- means for determining a binary conversion threshold value (15) for binary converting said object normalized value are provided, which means comprises

  - - means for holding the statistical distribution of said object normalized values (12) which is represented by said object normalized values and appearance frequencies thereof,
  - - peak value evaluating means (14) for evaluating a first peak appearance frequency value corresponding to said portion of the first optical density and a second peak appearance frequency value corresponding to said portion of the second optical density based on said object normalized value; and
  - - threshold value operating means (15) for evaluating a threshold value which corresponds to an intermediate value between the object normalized values corresponding to said first and second peak values.

2. An image reading apparatus according to claim 1, wherein said photoelectric converting means (5) comprises an image sensor (5).

3. An image reading apparatus according to claim 1, characterized in that said photoelectric converting means (5) comprises CCD (charge coupled device).

4. An image reading apparatus according to claim 1, characterized in that said photoelectric converting means (5) comprises a photodiode.

5. An image reading apparatus according to one of the preceding claims, characterized in that
   - said illuminating apparatus (3) comprises an illuminating system for obtaining light transmitted from said object, and
   - said optical system projects said transmitted light onto said photoelectric converting means (5).

6. An image reading apparatus according to one of the claims 1 to 4, characterized in that
   - said illuminating apparatus (3) comprises an illuminating system for obtaining light reflected from said object, and
   - said optical system projects said reflected light onto said photoelectric converting means (5).

7. A binary conversion process for an image reading apparatus, comprising the steps of:
   - preparing a reference plate (1a),

   - preparing an object (1) having an image represented by a portion of a first optical density and a portion of a second optical density which is different from said first optical density,
   - illuminating said object (1) and said reference-plate (1a), scanning said illuminated object (1) and said illuminated reference plate (1a), detecting amounts of light from said object (1) and from said reference plate (1a) to output output signals corresponding to said amounts of light,
   - obtaining a first output signal by scanning said reference plate,
   - obtaining a second output signal by scanning said object (1),
   - obtaining an object normalized value by evaluating the ratio of said second output signal to said first output signal,
     characterized by
   - determining a binary conversion threshold value for binary converting said object normalized value, based on said object normalized value, and
   - binary converting said object normalized value on the basis of said binary conversion threshold value, by
     - - holding the statistical distribution of said object normalized values (12) which is represented by said object normalized values and appearance frequencies thereof,
     - - evaluating a first peak appearance frequency value corresponding to said portion of the first optical density and a second peak appearance frequency value corresponding to said portion of the said second optical density based on said object normalized value, and
     - - evaluating a threshold value corresponding to an intermediate value between the object normalized values corresponding to said first and second peak appearance frequency values.

8. A binary converting process according to claim 7, characterized in that said object normalized value is evaluated for each of photocells arranged in one dimension.

9. A binary converting process according to claim 7 or 8, characterized in
   - obtaining light reflected from said object, and projecting said reflected light onto said photoelectric converting means.

10. A binary converting process according to claim 7 or 8, characterized in
 - obtaining light transmitted from said object, and projecting said transmitted light onto said photoelectric converting means.

11. A binary converting process according to one of the claims 7 to 9, characterized in that said step of binary converting said object normalized value comprises the steps of:
 - evaluating a threshold value of said photoelectric converting means by multiplying said binary conversion threshold value by said first output signal, and
 - binary converting said second output signal by means of the threshold value of said photoelectric converting means.

12. Use of a binary converting process according to one of the claims 7 to 11 for checking appearance of a printed board.

**Patentansprüche**

1. Bildlesegerät umfassend:
 - eine Referenzplatte (1a) zum Erhalten eines Referenzsignals,
 - einen Tisch (2) zum Plazieren eines Objekts (1), wobei besagtes Objekt eine Abbildung besitzt, die durch einen Bereich einer ersten optischen Dichte und einen Bereich einer zweiten optischen Dichte, die unterschiedlich von der ersten optischen Dichte ist, dargestellt wird,
 - Abtastmittel (2) zum Abtasten des Objekts, das auf besagtem Tisch und besagter Referenzplatte plaziert ist, aufweisend
 - eine Beleuchtungsapparatur (3) zum Beleuchten von besagtem Objekt und besagter Referenzplatte,
 - photoelektrische Umsetzungsmittel (5) zur Detektion der Menge des Lichtes von besagten Objekt und von besagter Referenzplatte, um ein Ausgangssignal herauszugeben, das besagter Lichtmenge entspricht, und
 - ein optisches System (4) zur Projektion des Lichtes von besagten Objekt und von besagter Referenzplatte auf besagte photoelektrische Umsetzungsmittel (5),
 - Arbeitsmittel für objektnormalisierten Wert (13) zur Abschätzung eines normalisierten Wertes des Objekts, der durch das Verhältnis von einem ersten Ausgangssignal, das aus besagten Referenzsignal erhalten wird, zu einem zweiten Ausgangssignal, das für besagtes Objekt erhalten wird, dargestellt wird,
dadurch gekennzeichnet, daß
 - besagte photoelektrische Umsetzungsmittel eine Vielzahl von photoelektrischen Elementen enthalten,
 - ein besagtes erste Ausgangssignal durch Abtasten besagter Referenzplatte und besagtes zweite Ausgangssignal durch Abtasten besagten Objekts für jedes der besagten photoelektrischen Elemente erhalten wird, und
 - Mittel zum Bestimmen eines Binärumsetzungsschwellwertes (15) zur Binärumsetzung von besagtem normalisierten Wert des Objekts zur Verfügung gestellt werden, was Mittel umfaßt
   - - Mittel zum Halten der statistischen Verteilung von besagten normalisierten Werten des Objekts (12), die durch besagte normalisierten Werte des Objekts und Auftretungsfrequenzen derselben dargestellt wird,
   - - Spitzenwertbestimmungsmittel (14) zur Bestimmung eines ersten Spitzenwertes der Auftretungsfrequenz, der besagtem Bereich der ersten optischen Dichte entspricht, und eines zweiten Spitzenwertes der Auftretungsfrequenz, der besagten Bereich der zweiten optischen Dichte entspricht, beruhend auf besagten normalisierten Wert des Objekts; und
   - - Schwellwertarbeitsmittel (15) zur Bestimmung eines Schwellwertes, der mit einem dazwischenliegenden Wert, zwischen den normalisierten Werten die Objekts, die besagten ersten und zweiten Spitzenwert entsprechen, übereinstimmt.

2. Bildlesegerät nach Anspruch 1, dadurch gekennzeichnet, daß besagtes photoelektrische Umsetzungsmittel (5) einen Bildsensor (5) umfaßt.

3. Bildlesegerät nach Anspruch 1, dadurch gekennzeichnet, daß besagtes photoelektrische Umsetzungsmittel (5) einen CCD (ladungsgekoppelter Speicher) umfaßt.

4. Bildlesegerät nach Anspruch 1, dadurch gekennzeichnet, daß besagtes photoelektrische Umsetzungsmittel (5) eine Photodiode umfaßt.

5. Bildlesegerät nach einem der vorangegangenen Ansprüche, dadurch gekennzeichnet, daß

besagte Beleuchtungsapparatur (3) ein Beleuchtungssystem zum Erhalten von besagtem Objekt transmittierten Lichtes umfaßt, und

besagtes optische System besagtes transmittierte Licht auf besagtes photoelektrische Umsetzungsmittel (5) projiziert.

6. Bildlesegerät nach einem der Ansprüche 1 bis 4, dadurch gekennzeichnet, daß

besagte Beleuchtungsapparatur (3) ein Beleuchtungssystem zum Erhalten von besagten Objekt reflektierten Lichtes umfaßt, und

besagtes optisches System besagtes reflektierte Licht auf besagtes photoelektrische Umsetzungsmittel (5) projiziert.

7. Binärumsetzungsverfahren für ein Bildlesegerät, das die folgenden Schritte umfaßt:

- Anfertigung einer Referenzplatte (1a),

- Anfertigung eines Objekts (1), das eine Abbildungs aufweist, die durch einen Bereich einer ersten optischen Dichte und einen Bereich einer zweiten optischen Dichte, die unterschiedlich von besagter ersten optischen Dichte ist, dargestellt wird,

- Beleuchtung besagten Objekts (1) und besagter Referenzplatte (1a), Abtasten besagten beleuchteten Objekts (1) und besagter beleuchteten Referenzplatte (1a), Detektion der Lichtmenge von besagten Objekt (1) und von besagter Referenzplatte (1a), um Ausgangssignale, die den besagten Lichtmengen entsprechen, auszugeben,

- Erhalten eines ersten Ausgangssignals durch Abtasten besagter Referenzplatte,

- Erhalten eines zweiten Ausgangssignals durch Abtasten besagten Objekts (1),

- Erhalten eines normalisierten Wertes des Objekts durch Bestimmung des Verhältnisses von besagten zweiten Ausgangssignal zu besagten ersten Ausgangssignal,

gekennzeichnet durch

- Ermitteln eines Binärumsetzungsschwellwertes zur Binärumsetzung von besagten normalisierten Wert des Objekts, beruhend auf besagten normalisierten Wert des Objekts, und

- Binärumsetzung besagten normalisierten Wertes des Objekts auf der Basis von besagten Binärumsetzungsschwellwertes, durch

- - Halten der statistischen Verteilung von besagten normalisierten Werten des Objekts (12), die durch besagte normalisierten Werte des Objekts und die Auftretungsfrequenzen derselben dargestellt wird,

- - Bestimmung eines ersten Spitzenwertes der Auftretungsfrequenz, der besagtem Bereich von der ersten optischen Dichte entspricht, und eines zweiten Spitzenwertes der Auftretungsfrequenz, der besagtem Bereich von besagter zweiten optischen Dichte entspricht, beruhend auf besagtem normalisierten Wert des Objekts, und

- - Bestimmung eines Schwellwertes, der mit einem dazwischenliegenden Wert, zwischen den normalisierten Werten des Objekts, die besagten ersten und zweiten Spitzenwert der Auftretungsfrequenz entsprechen, übereinstimmt.

8. Binärumsetzungsverfahren nach Anspruch 7, dadurch gekennzeichnet, daß besagter normalisierte Wert des Objekts für jede der Photozellen, die in einer Dimension angeordnet sind, bestimmt wird.

9. Binärumsetzungsverfahren nach Anspruch 7 oder 8, gekennzeichnet durch

- Erhalten von besagtem Objekt reflektierten Lichtes und Projizieren von besagten reflektierten Licht auf besagtes photoelektrische Umsetzungsmittel.

10. Binärumsetzungsverfahren nach Anspruch 7 oder 8, gekennzeichnet durch

- Erhalten von besagtem Objekt transmittierten Lichtes und Projizieren von besagtem transmittierten Licht auf besagtes photoelektrische Umsetzungsmittel.

11. Binärumsetzungsverfahren nach einem der Ansprüch 7 bis 9, dadurch gekennzeichnet, daß besagte Schritte der Binärumsetzung von besagtem normalisierten Wert des Objekts die folgenden Schritte umfaßt:

- Bestimmung eines Schwellwertes von besagtem photoelektrischen Umsetzungsmittel durch Multiplizieren besagten Binärumsetzungsschwellwertes mit besagtem ersten Ausgangssignal, und

- Binärumsetzung von besagten zweiten Ausgangssignal mittels des Schwellwertes von besagten photoelektrischen Umsetzungsmittel.

**12.** Verwendung eines Binärumsetzungsverfahrens nach einem der Ansprüche 7 bis 11 zum Kontrollieren des Aussehens einer Montageplatte.

## Revendications

**1.** Appareil de lecture d'image, comprenant:

- une plaque de référence (1a) servant à obtenir un signal de référence,
- un plateau (2) pour placer un objet (1), ledit objet présentant une image représentée par une partie dotée d'une première densité optique, et une partie dotée d'une seconde densité optique, qui est différente de la première densité optique,
- un moyen de balayage (2) pour balayer l'objet placé sur ledit plateau et ladite plaque de référence, présentant:
- un appareil d'éclairage (3) servant à éclairer ledit objet et ladite plaque de référence,
- un moyen de conversion photoélectrique (5) servant à mesurer la quantité de lumière provenant dudit objet et de ladite plaque de référence, pour émettre un signal de sortie correspondant à ladite quantité de lumière, et
- un système optique (4) pour projeter de la lumière provenant dudit objet et de ladite plaque de référence, sur ledit moyen de conversion photoélectrique (5),
- un moyen de calcul de valeur normalisée d'objet (13) pour évaluer une valeur normalisée d'objet qui est représentée par le rapport entre un premier signal de sortie obtenu à partir dudit signal de référence, et un second signal de sortie obtenu à partir dudit objet, caractérisé en ce que:
- ledit moyen de conversion photoélectrique comprend une pluralité d'éléments photoélectriques,
- un dit premier signal de sortie est obtenu par balayage de ladite plaque de référence, et un dit second signal de sortie est obtenu par le balayage dudit objet par chaque dit élément photoélectrique, et
- des moyens pour déterminer une valeur seuil de conversion binaire (15), en vue de réaliser une conversion binaire de ladite valeur normalisée d'objet, ces moyens comprenant:
- - des moyens pour maintenir la distribution statistique desdites valeurs normalisées d'objet (12), représentée par lesdites valeurs normalisées d'objet et ses fréquences d'apparition,
- - des moyens d'évaluation de valeur crête (14) pour évaluer une première valeur crête de fréquence d'apparition correspondant à ladite partie dotée de la première densité optique, et une seconde valeur crête de fréquence d'apparition correspondant à ladite partie dotée de la seconde densité optique, sur la base de ladite valeur normalisée d'objet, et
- - un moyen de calcul de valeur seuil (15) pour évaluer une valeur seuil qui corresponde à une valeur intermédiaire entre les valeurs normalisées d'objet correspondant aux première et seconde valeurs crête.

**2.** Appareil de lecture d'image selon la revendication 1, dans lequel ledit moyen de conversion photoélectrique (5) comprend un capteur d'image (5).

**3.** Appareil de lecture d'image selon la revendication 1, caractérisé en ce que ledit moyen de conversion photoélectrique (5) comprend un CCD (circuit à transfert de charges).

**4.** Appareil de lecture d'image selon la revendication 1, caractérisé en ce que ledit moyen de conversion photoélectrique (5) comprend une photodiode.

**5.** Appareil de lecture d'image selon l'une quelconque des revendications précédentes, caractérisé en ce que:

- ledit appareil d'éclairage (3) comprend un système d'éclairage pour obtenir une lumière transmise par ledit objet, et
- ledit système optique projette ladite lumière transmise sur ledit moyen de conversion photoélectrique (5).

**6.** Appareil de lecture d'image selon l'une quelconque des revendications 1 à 4, caractérisé en ce que:

- ledit appareil d'éclairage (3) comprend un système d'éclairage pour obtenir une lumière réfléchie par ledit objet, et
- ledit système optique projette ladite lumière réfléchie sur ledit moyen de conversion photoélectrique (5).

**7.** Procédé de conversion binaire pour un appareil de lecture d'image, comprenant les étapes de:

- préparation d'une plaque de référence (1a),

- préparation d'un objet (1) présentant une image représentée par une partie dotée d'une première densité optique, et une partie dotée d'une seconde densité optique, qui est différente de la première densité optique,
- l'éclairage dudit objet (1) et de ladite plaque de référence (1a), le balayage (1) dudit objet (1) et de ladite plaque de référence (1a) éclairés, la mesure de quantités de lumière provenant dudit objet (1) et de ladite plaque de référence (1a), pour émettre des signaux de sortie correspondant auxdites quantités de lumière,
- l'obtention d'un premier signal de sortie par balayage de ladite plaque de référence,
- l'obtention d'un second signal de sortie par balayage dudit objet (1),
- l'obtention d'une valeur normalisée d'objet par évaluation du rapport entre ledit second signal de sortie et ledit premier signal de sortie,
caractérisé par:
- la détermination d'une valeur seuil de conversion binaire, en vue de réaliser une conversion binaire de ladite valeur normalisée d'objet, sur la base de ladite valeur normalisée d'objet, et
- la conversion binaire de ladite valeur normalisée d'objet sur la base de ladite valeur seuil de conversion binaire, par:
  - - maintien de la distribution statistique desdites valeurs normalisées d'objet (12), représentée par lesdites valeur normalisées d'objet et ses fréquences d'apparition,
  - - évaluation d'une première valeur crête de fréquence d'apparition correspondant à ladite partie dotée de la première densité optique, et une seconde valeur crête de fréquence d'apparition correspondant à ladite partie dotée de la seconde densité optique, sur la base de ladite valeur normalisée d'objet, et
  - - évaluation d'une valeur seuil correspondant à une valeur intermédiaire entre les valeurs normalisées d'objet, correspondant auxdites première et seconde valeurs crête.

8. Procédé de conversion binaire selon la revendication 7, caractérisé en ce que ladite valeur normalisée d'objet est évaluée pour chacune des cellules photoélectriques disposées en une dimension.

9. Procédé de conversion binaire selon la revendication 7 ou 8, caractérisé par:
   - l'obtention de lumière réfléchie par ledit objet, et la projection de ladite lumière réfléchie sur ledit moyen de conversion photoélectrique.

10. Procédé de conversion binaire selon la revendication 7 ou 8, caractérisé par:
    - l'obtention de lumière transmise par ledit objet, et la projection de ladite lumière transmise sur ledit moyen de conversion photoélectrique.

11. Procédé de conversion binaire selon l'une quelconque des revendications 7 à 9, caractérisé en ce que ladite étape de conversion binaire de ladite valeur normalisée d'objet comprend les étapes :
    - d'évaluation d'une valeur seuil dudit moyen de conversion photoélectrique, en multipliant ladite valeur seuil de conversion binaire par ledit premier signal de sortie, et
    - de conversion binaire dudit second signal de sortie au moyen de la valeur seuil dudit moyen de conversion photoélectrique.

12. Utilisation d'un procédé de conversion binaire selon l'une quelconque des revendications 7 à 11, pour contrôler l'apparence d'une plaquette de circuits imprimés.

FIG.1

FIG.2

FIG.5

I/O   DATA
      BUS   11   ARITHMETIC
            OPERATION
            UNIT

IMAGE
SENSOR

A/D

INPUT/
OUTPUT
OPERATION

EXTERNAL
MEMORY

DISPLAY
MEANS

INTERNAL
MEMORY
12

OBJECT NORM
VALUE OPERATION
13

HISTOGRAM
OPERATION
14

THRESHOLD
OPERATION
15

COMPARATOR
16

# FIG.3

START

DETECT REF LIGHT AMOUNT OF REF PLATE TO OBTAIN REF DATA Vsi — A

DETECT LIGHT AMOUNT OF OBJECT TO OBTAIN OBJECT DATA Vxi — B

OBTAIN OBJECT NORM VALUE
$Nx_I = 255 \times Vx_i / Vs_i$ — C

FORM HISTOGRAM OF N NORM VALUES Nxi — D

OBTAIN THRESHOLD $T_H$ FOR BINARY CONVERSION BASED ON HISTOGRAM — E

F

CALCULATE THRESHOLD THi OF EACH PHOTOCELL — J

BINARY CONVERT OBJECT NORM VALUE Nxi — G

BINARY CONVERT OBJECT DATA Vxi BASED ON THi — K

END

13

## FIG.4A

Vs

1 2 3 · · · · · ·      n      i

## FIG.4B

Vx

1 2 3 · · · · · ·      n      i

## FIG.4C

Nx

1 2 3 · · · · · ·      n      i

## FIG.4D

nk

$n_2$
$n_1$

$n_3$

Nx

$B_R$    $T_H$    $W_R$

L            H

## FIG.4E

1

0

1 2 3 4 · · · · · · ·      n      i

# FIG.6

```
                    START

            SET REF PLATE ON          A1
            CHECK TABLE

            SET REF DATA              A2
            READING MODE

            READ REF DATA Vsi
            FOR 1 LINE TO WRITE       A3
            IN INTERNAL MEMORY

            WRITE REF DATA Vsi        A4
            IN EXTERNAL MEMORY

    NO            SCANNED             A5
            N TIMES
                ?
                       YES

            CALCULATE AVERAGE
            REF DATA Vsi OF N         A6
            SCAN TO WRITE IN
            EXTERNAL MEMORY

            CANCEL REF DATA           A7
            READING MODE

            RETURN CHECK TABLE
            TO ORIGINAL              A8
            REMOVE REF PLATE

                    B
```

# FIG.7

B

SET PRINTED BOARD ON CHECK TABLE — B1

SET OBJECT DATA READING MODE — B2

WRITE OBJECT DATA Vxi IN EXTERNAL MEMORY — B3

AUTOMATICALLY SET ARITHMETIC OPERATION MODE — C1

CALCULATE OBJECT NORM VALUE Nxi = Vxi / Vsi TO WRITE IN INTERNAL MEMORY — C2

FORM HISTOGRAM FOR n OBJECT NORM VALUES Vxi — D

FIND PEAKS $n_1$, $n_2$ OF FREQUENCY OF APPEARANCE — E1

FIND THRESHOLD TH — E2

WRITE THRESHOLD TH IN EXTERNAL MEMORY — E3

CANCEL ARITHMETIC OPERATION MODE — E4

RETURN CHECK TABLE TO ORIGINAL. REMOVE PRINTED BOARD — E5

ALL PRINTED BOARDS FINISHED? — E6 — NO — B — YES

F

16

# FIG.8

F

SET PRINTED BOARD
TO BE CHECKED ON
CHECK TABLE — F1

SET CHECK MODE
DESIGNATE TYPE OF
PRINTED BOARD — F2

WRITE THRESHOLD $T_H$
FROM EXTERNAL TO
INTERNAL MEMORY — F3

F4

SELECT J OR G

J

G

# FIG.9

```
        ┌───┐
        │ G │
        └─┬─┘
          ▼
┌─────────────────────────┐
│ CHECK (TABLE FEED)      │──G1
│ START                   │
└────────────┬────────────┘
             │
   ┌─────────▼───────────────────┐
   │ READ OBJECT DATA Vxi.       │
   │ SUCCESSIVELY CALCULATE      │──G2
   │ OBJECT NORM VALUE           │
   │ Nxi                         │
   └─────────────┬───────────────┘
                 │      G3
                 ▼
              ◇ Nxi >TH ◇──── NO ──────┐
                 │                  G5  │
                 │ YES                  ▼
        ┌────────▼────────┐   ┌──────────────────┐
   G4 ──│ OUTPUT HIGH     │   │ OUTPUT LOW       │
        │ LEVEL SIGNAL 1  │   │ LEVEL SIGNAL 0   │
        └────────┬────────┘   └─────────┬────────┘
                 │◄─────────────────────┘
                 ▼           G6
              ◇ ENTIRE         ◇
   NO ────────◇ SURFACE        ◇
              ◇ PROCESSED      ◇
                 │    ?
                 │ YES
              ┌──▼──┐
              │ END │
              └─────┘
```

$Nxi > TH$

# FIG.10

J

WRITE REF DATA Vsi IN INTERNAL MEMORY — J1

CALCULATE THRESHOLD OF EACH PHOTOCELL TO WRITE IN INTERNAL MEMORY — J2

CHECK (TABLE FEED) START — K1

READ OBJECT DATA Vxi — K2

K3: $V_{xi} > T_{Hi}$

NO → K5: OUTPUT LOW LEVEL SIGNAL 0

YES → K4: OUTPUT HIGH LEVEL SIGNAL 1

K6: ENTIRE SURFACE PROCESSED ?

NO

YES → END

# FIG.11

CCD — 5

A/D CONVERTER — 7

BLACK OFFSET ADJUSTER — 55

DATA NORMALIZER — 56

COMPARATOR — 57

BINARI-ZED DATA

CPU — 51

I/F — 53

TIMING CONTROL — 54

MEMORY — 52

11

EP 0 295 588 B1

# FIG.12

DATA NORMALIZATION

EP 0 295 588 B1

# FIG.13

DATA NORMALIZATION